# EUROPEAN PATENT APPLICATION

(11) **EP 4 704 378 A1**
(43) Date of publication of application: **04.03.2026**
(21) Application number: 24197705.7
(22) Date of filing: 30.08.2024
(51) Int. Cl.: H04L 9/40, H04L 67/12

(54) **METHOD AND SYSTEM FOR ESTABLISHING A SECURE COMMUNICATION BETWEEN A DEVICE AND A COMPONENT OF A SECURED AUTOMATION SYSTEM**

(71) Applicant: Siemens Schweiz AG, 8047 Zürich (CH)
(72) Inventor: Bögli, Daniel, 6312 Steinhausen (CH); Aschauer, Hans, 81829 München (DE)
(74) Representative: Siemens Patent Attorneys

(57) **Abstract**

The invention relates to a method and a system for establishing a secure communication (SC) between a device (Dev) and a component (C) of a secured automation system, the method comprising:
a) establishing a communication (SC) between the device (Dev) and a secure communication server (SCS),
b) checking a device identifier (IDevID, LDevID) of the device (Dev),
c1) if the device identifier (IDevID, LDevID) is an initial device identifier (IDevID), assigning a local device identifier (LDevID) to the device (Dev), stopping the communication (SC) between the device (Dev) and the secure communication server (SCS), and returning to step a), or
c2) if the device identifier (IDevID, LDevID) is a local device identifier (LDevID), establishing a secure communication (SC) between the device (Dev) and the component (C) of the secured automation system using the local device identifier (LDevID).

## Description

The present invention relates to a method for establishing a secure communication between a device and a component of a secured automation system. Moreover, the invention relates to a system for establishing a secure communication between a device and a component of a secured automation system. Further, the invention relates to a computer program product comprising a program code for executing such a method.

In secured automation systems, for example building, energy or industrial automation systems, a secured communication between devices and/or components of the automation system is required. When a new device is deployed in such a secured automation system, it is thus necessary to establish mutual trust between the new device and the automation system so that it can be ensured that the communication within the automation system, i.e., between the new device and other components of the automation system, is secure. This process is called an onboarding process, and requires the generation, certification and exchange of credentials or other authentication information between the device and the automation system.

In order to minimize the number of manual configuration steps, it is beneficial to establish and perform an automated onboarding process. However, the onboarding process requires a secure communication to exchange credentials. The goal of the onboarding process is mutual trust, which is required for secure communication, which in turn is required for the secure exchange of credentials.

In a specific arrangement, a communication between devices and the automation system takes place using a VPN connection, for example for communication with cloud endpoints and the internet. Thus, devices connecting to the cloud of the automation system need to communicate through this VPN. The devices then need to be configured to be registered and thrusted by the cloud of the automation system in a follow up step. This requires knowledge about networking and VPN and as well as a complex authentication procedure.

Thus, it is one object of the present invention to provide a simplified way of providing a communication between (new) devices and a secured automation system whilst ensuring that the devices are authenticated and allowed to communicate with any components of the secured automation system.

According to a first aspect, a method for establishing a secure communication between a device and a component of a secured automation system is provided. As already mentioned above, the secured automation system may be for example a building, energy, or industrial automation system. Such automation systems may provide some critical functions or services and thus may require that it is ensured that devices, in particular newly added devices, have the allowance and are authenticated to communicate with components of the secured automation system. A device in this context may be for example an Edge device, an industrial personal computer, a control unit (such as a PLC), a room automation controller, or any other kind of device. A component of the secured automation system may be any device being part of the secured automation system, may be a cloud service of the secured automation system, may be an automation service of the secured automation system or may be any other component being part of the secured automation system.

When a device wants to establish a communication with the secured automation system, it needs to be ensured that the device has the authentication or credential for such a communication. As described above, mutual trust between the device and the secured automation system is required, but first needs to be established. Thus, for adding a (new) device to the secured automation system or rather to establish a secure communication between the device and the secured automation system, the method comprises the following steps:
a) establishing a communication between the device and a secure communication server,
b) checking a device identifier of the device,
c1) if the device identifier is an initial device identifier, assigning a local device identifier to the device, stopping the communication between the device and the secure communication server, and returning to step a), or
c2) if the device identifier is a local device identifier, establishing a secure communication between the device and the component of the secured automation system using the local device identifier.

In step a), a preliminary communication is established between the device and a secure communication server. The secure communication server may be part of the secured automation system or may upstream of the secured automation system (as a kind of gateway). In any case, in this first step a), the desired communication between the device and the secured automation system is stopped at the secured automation server and the device cannot directly access further components of the secured automation system. For example, the secured automation server may be a VPN server. The preliminary communication may take place via a secure communication channel, such as a VPN communication channel. The secure communication channel may be a wired or wireless communication channel.

After that, a device identifier of the device is checked in step b). In the context of this application, two different kind of device identifiers exist: an initial device identifier and a local device identifier. The initial device identifier may be initially part of the device and may be sufficient for a communication with the secure communication server but not for a communication with the remaining secured automation system. In contrast, the local device identifier is needed for allowing an extended communication beyond the secure communication server, i.e., for allowing a communication with the remaining secured automation system. When the preliminary communication is established, the secure communication server will thus check the device identifier in order to decide whether the device is allowed to only communicate with the secure communication server or whether the device is allowed to communicate with the secured automation system.

If the device identifier is an initial device identifier, a local device identifier is assigned to the device in step c1). Thus, the device is initially only allowed to communicate with the secure communication server but then gets a local device identifier which grants access to the secured automation system. After the local device identifier is assigned to the device, the preliminary communication between the device and the secure communication server is stopped and the method returns to step a). This means that the communication between the device and the secure communication server is re-established, and the secure communication server again checks the device identifier which will then be a local device identifier. With this reestablishment of the communication, the device can re-authenticate and authorize wit the secure communication server for getting access to the secured automation system.

If the device identifier is a local device identifier, a secure communication between the device and the component of the secured automation system is established using the local device identifier.

Thus, by using the above-described method, which can be performed automatically, a device may be communicate with a secured automation system independent on the currently assigned device identifier. Thus, a new device may be easily and automatically be added to the secured automation system as the device identifier may be checked and a local device identifier (which is needed for communicating with the secured automation system), if not already present, may be automatically added and assigned to the device.

According to a further embodiment, the method further comprises communicating with an authentication authority in step b), wherein the authentication authority assigns the local device identifier to the device. The authentication authority may be part of the secured automation system. For example, the authentication authority may be an identity and access management (IAM) system. The authentication authority may be an authentication authority of the operator of the secured automation system.

It should be noted that independent of the grammatical term usage, individuals with male, female or other gender identities are included within the term.

The authentication authority may decide, according to built-in or configured rules, which device is allowed to communicate with which device or component of the secured automation system. When a new device asks for permission to communicate with the secured automation system, the authentication authority may issue in step c1) a local device identifier which specifies the components or devices of the secured automation system with which the device should be allowed to communicate. This may be based on the built-in or configured rules as mentioned above.

According to a further embodiment, the authentication authority authenticates the device before assigning the local device identifier. Thus, the authentication authority may ensure that the device is allowed for the intended communication, which improves the security of the secured automation system.

According to a further embodiment, the initial device identifier is an identifier being issued by the manufacturer of the device. The initial device identifier may be a factory imprinted certificate. This certificate may be issued by a certification authority (CA) operated by the manufacturer of the device. It is intended to prove that the device is a legit device of the manufacturer. The certificate or initial device identifier may for example contain an identity of the device (e.g., a serial number). This identity may be used for example for authenticating the device by the authentication authority as described above.

According to a further embodiment, the local device identifier includes information regarding the device when operating in the secured automation system. Thus, in contrast to the initial device identifier, which may include information of the device with respect to the manufacturer of the device, the local device identifier includes information with respect to environment in which the device will be used or will communicate. Such a local device identifier may for example include information on the device which is relevant in the local environment of the secured automation system (e.g., a room number, a description of the purpose of the device in the system). As mentioned above, the local device identifier may also specify rights, for example access rights, of the device. The local device identifier may be in the form of a certificate, possibly together with a corresponding private key.

The issue and corresponding installation of the local device identifier (for example as a certificate, possibly together with a corresponding private key) on the device may be based on the fact that the operator of the secured automation systems has trust in the device based on the initial device identifier issued by the manufacturer. Thus, the above-mentioned problem of needing mutual trust, which is required for secure communication, which in turn is required for the secure exchange of credentials, may be overcome by the present application by trusting the initial device identifier for example when specifying a trustworthy manufacturer. Based on the trusted initial device identifier, the local device identifier may then be assigned and the communication between the device and the secured automation system may be allowed.

According to a further embodiment, the component of the secured automation system is a cloud server of the secured automation system. The component may also be any other part of the secured automation system such as an automation service, other devices of the secured automation system, etc. In any case, the device may communicate with the component of the secured automation system via a secure communication channel, for example a VPN communication channel.

According to a further embodiment, the local device identifier defines permissions for the device with respect to access to components of the secured automation system. Thus, according to this embodiment, the local device identifier does not automatically grant access to all components of the secured automation system. Rather, some devices may get access to specific components and other devices may get access to other specific components. When assigning the local device identifier, the device may be identified and the required authentication and access to the components may be specified for the corresponding device. Thus, the local device identifier may individually define the permissions for the corresponding device. This provides the advantage that each device may access or communicate with the components necessary for the functionality of the corresponding device, whereas the device may not access or communicate with other components to which the device needs no access. This may improve the overall security of the secured automation system.

According to a further aspect, a system for establishing a secure communication between a device and a component of a secured automation system is provided. The system comprises a secure communication server which is configured to:
a) establish a communication with the device,
b) check a device identifier of the device,
c1) if the device identifier is an initial device identifier, assign a local device identifier to the device and stop the communication with the device, or
c2) if the device identifier is a local device identifier, establish a secure communication between the device and the component of the secured automation system using the local device identifier.

As already explained above, the secure communication server may be for example a VPN server and may establish a VPN communication channel between the device and itself and, if the device identifier is a local device identifier, may extend the VPN communication channel to a component, such as a cloud server, of the secured automation system.

According to a further embodiment, the system further comprises an authentication authority being configured to issue the local device identifier to be assigned to the device. The authentication authority may be for example an identity and access management. The authentication authority may not only issue the local device identifier but may also verify whether the device is authenticated to communicate with the secured automation system based on the initial device identifier.

When the local device identifier is already assigned to the device and the device tries to establish a communication with the secured automation system, the authentication authority may also verify whether the device is authenticated to communicate with the secured automation system based on the local device identifier. In this case, the secure communication server may communicate with the authentication authority for forwarding the local device identifier to the authentication authority for verification. Such a verification or authentication may be performed in several ways, for example via mutual TLS with client-certificates or signed JSON Web Tokens.

According to a further embodiment, the secure communication server is configured to send the device identifier to the authentication authority which is further configured to check the device identifier. As already mentioned above, the authentication authority may check the local device identifier for granting access to the secured automation system, i.e., for allowing the secure communication server to establish a communication between the device and the secured automation system. Further, when the device identifier is an initial device identifier, the authentication authority may be configured to check the initial device identifier and may assign a corresponding local device identifier.

Thus, establishing a communication between the device and the secured automation system may be easily achieved, independent of the device identifier as in both cases, local or initial device identifier, the secure communication server may interact with the authentication authority for establishing the communication between the device and the secured automation system. In case of the initial device identifier, the communication is established after the local device identifier is assigned and the communication between the device and the secure communication server is re-established. In case of the local device identifier, the communication between the device and the secured automation system may be directly established.

The secured automation system may be a building, energy or industrial automation system or any other kind of automation system which may require a secure communication between its devices and/or components.

The device may be for example an Edge device. The device may also be any other kind of device being used in a secured automation system, for example an industrial personal computer, a control unit, or the like.

As mentioned above, the device may be onboarded using a cloud-based backend, using a VPN. To this end, the device authenticates itself to the secure communication server, for example a VPN endpoint, which requests authorization from the IAM system. However, the system is not restricted to this communication scenario; it may also be used in scenarios where the device requests an authorization token from the IAM system, which it presents e.g., to the VPN endpoint, or in scenarios where the device talks to an on-the-premise provisioning system.

The respective entity, e.g., the secure communication server or the authentication authority, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

According to a further aspect, the invention relates to a computer program product comprising a program code for executing the above-described method for establishing a secure communication between a device and a component of a secured automation system when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic block diagram of a system for establishing a secure communication between a device and a component of a secured automation system; and
- Fig. 2: shows a sequence of steps of a method for establishing a secure communication between a device and a component of a secured automation system.

In the Figures, like reference numerals designate like or functionally equivalent elements, unless otherwise indicated.

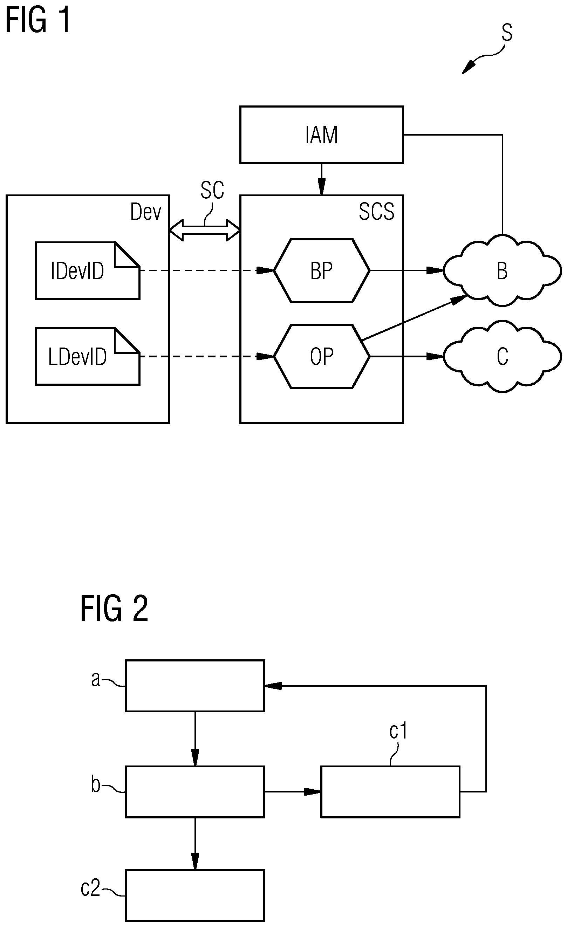

Fig. 1 shows a system S for establishing a communication between a device Dev and a component of a secured automation system. The secured automation system may comprise a plurality of components, one of them is shown exemplary and may be a cloud server C. The cloud server C may provide for example cloud and automation services. However, it should be noted that any other components and number of components may be present, and the device Dev may establish a communication with any of the components or devices of the secured automation system.

When the device Dev wants to establish a communication with the component C, the device Dev initially initiates a communication via a secure communication SC (for example a VPN communication) with a secure communication server SCS. The secure communication server SCS may be for example a VPN server. However, any other kind of secure communication and corresponding secure communication server may be used in this system S.

Instead of directly connecting with the component C, the device Dev can only connect to and communicate with the secure communication server SCS which serves as a communication endpoint or VPN endpoint.

In this first step, the device Dev authenticates with the secure communication server SCS using a device identifier. The device identifier may be either an initial device identifier IDevID or a local device identifier LDevID. The initial device identifier IDevID is a device identifier being issued by the manufacturer of the device Dev and being factory imprinted. The local device identifier LDevID is a device identifier being issued by the operator of the secured automation system. This local device identifier LDevID authorizes the device Dev to communicate with the secured automation system.

In the system S, the device Dev can use the initial device identifier IDevID for authentication, as will be described in the following. In previous systems, such an authentication based on the initial device identifier IDevID would fail, since only local device identifiers LDevID are allowed for authentication and following communication with the secured automation system. In the herein described system S, the device Dev may authenticate with both kinds of the device identifier and the secure communication server will decide on how to authenticate the device Dev.

Thus, as mentioned above, the device Dev starts a secure communication SC with the secure communication server SPC.

When the device identifier is the initial device identifier IDevID, the secure communication server SCS limits the communication with the device Dev and only allows registering the device Dev with the secure communication server SCS. The secure communication server SCS thus trusts this device Dev only to connect to a public bootstrap endpoint B. This bootstrap endpoint B is already part of the cloud of the secured automation system, but without any access to the components of the secured automation system. As can be seen in Fig. 1, the secure communication server SCS uses a bootstrap policy BP for allowing the access to the bootstrap endpoint B. From there, the device Dev may communicate with an authentication authority IAM, which may be an identity and access management device.

The authentication authority IAM authenticates the device Dev based on the initial device identifier IDevID. This is based on the idea that device identifiers from specific manufacturers, which are predefined and stored in the authentication authority IAM, are supposed to be trusted.

When the authentication authority IAM has authenticated the device Dev, the authentication authority IAM will issue a local device identifier LDevID and assign this local device identifier LDevID to the device Dev. This local device identifier LDevID or local certificate proves that the device Dev was authenticated by the authentication authority IAM. At the same time, the certificate proves that the device Dev was claimed, i.e., is added to the secured automation system. After receiving this local device identifier LDevID, the device Dev will automatically close the existing secure communication SC, or the secure communication may be ended by the secure communication server SCS. The device Dev will then connect again to the secure communication server SCS with the local device identifier LDevID. The secure communication server SCS will fully trust the device with the local device identifier LDevID and allow full access to the components C of the secured automation system (e.g., cloud and required internet resources as well as other components and devices) via an operational policy OP.

As can be seen in Fig. 1, also when the device Dev has a local device identifier LDevID, the secure communication server SCS may authenticate the device Dev via the operational policy OP and the bootstrap endpoint B.

Thus, the device Dev may try to establish a communication with the secured automation system using an initial device identifier IDevID, in which case the system S will automatically assign a local device identifier LDevID to the device Dev (after checking and authenticating the device Dev). When the device Dev has already a local device identifier LDevID when trying to establish the communication with the secured automation system, the assignment of the local device identifier LDevID may be omitted, and the device Dev may directly be granted access to the secured communication system.

It should be noted that although the secured automation system is represented in Fig. 1 by one component C, the secured automation system may comprise a plurality of such components C. The components C may be any kind of device operating within the secured automation system or may be cloud or internet services.

A method for establishing a secure communication between a device Dev and a component C of a secured automation system is shown in Fig. 2.

In a first step a), the secure communication SC is established between the device Dev and the secure communication server SCS. For this communication, a device identifier is used which can be either an initial device identifier IDevID or a local device identifier LDevID.

In step b), the secure communication server SCS checks the device identifier of the device Dev.

When the device identifier is an initial device identifier IDevID, the secure communication server SCS authorizes the device Dev to connect to the cloud bootstrap endpoint B (see Fig. 1). Subsequently, the authentication authority IAM can claim the device Dev and can issue a local device identifier LDevID in step c1). Thus, the authentication authority IAM trusts the device Dev as described above. After receiving the local device identifier LDevID, the device Dev will reestablish the secure communication SC with the secure communication server SCS, and the method will start again with step a).

When the device identifier is identified as a local device identifier LDevID in step b), the secure communication server SCS allows a communication between the device Dev and the component C of the secured automation system in step c2).

In this case, the secure communication server SCS will trust the device Dev and thus will allow full connectivity to the cloud and required internet resources of the secured automation system. As an example, the component C is shown in Fig. 1 which may any component of the secured automation system, including any cloud services. Since the authentication is based on a local device identifier LDevID, the device Dev is considered trusted, and its operational role in the secured automation system is recognized. Thus, the secure communication server SCS will use operational communication policies for the device Dev, i.e., communication policies which are used for trusted devices of the secured automation system so that the devices have access to predefined components C of the secured automation system. After step c2), the device Dev is now fully operational within the secured automation system.

Although the present invention has been described in accordance with preferred embodiments, it is obvious for the person skilled in the art that modifications are possible in all embodiments.

### List of Reference

- B: bootstrap
- BP: bootstrap policy
- C: Component (cloud and automation services)
- Dev: Device
- IAM: authentication authority/identity and access management
- IDevID: initial device identifier
- LDevID: local device identifier
- OP: operational policy
- S: System
- SC: secure (VPN) communication
- SCS: secure (VPN) communication server
- a, b. c1, c2: method steps

## Claims

1. A method for establishing a secure communication (SC) between a device (Dev) and a component (C) of a secured automation system, the method comprising
a) establishing a communication (SC) between the device (Dev) and a secure communication server (SCS),
b) checking a device identifier (IDevID, LDevID) of the device (Dev),
c1) if the device identifier (IDevID, LDevID) is an initial device identifier (IDevID), assigning a local device identifier (LDevID) to the device (Dev), stopping the communication (SC) between the device (Dev) and the secure communication server (SCS), and returning to step a), or
c2) if the device identifier (IDevID, LDevID) is a local device identifier (LDevID), establishing a secure communication (SC) between the device (Dev) and the component (C) of the secured automation system using the local device identifier (LDevID).

2. The method according to claim 1, further comprising communicating with an authentication authority (IAM) in step b), wherein the authentication authority (IAM) assigns the local device identifier (LDevID) to the device (Dev).

3. The method according to claim 2, wherein the authentication authority (IAM) authenticates the device (Dev) before assigning the local device identifier (LDevID).

4. The method according to any one of the preceding claims, wherein the initial device identifier (IDevID) is an identifier being issued by the manufacturer of the device (Dev).

5. The method according to any one of the preceding claims, wherein the local device identifier (LDevID) includes information regarding the device (Dev) when operating in the secured automation system.

6. The method according to any one of the preceding claims, wherein the component (C) of the secured automation system is a cloud server of the secured automation system.

7. The method according to any one of the preceding claims, wherein the local device identifier (LDevID) defines permissions for the device (Dev) with respect to access to components (C) of the secured automation system.

8. A system for establishing a secure communication (SC) between a device (Dev) and a component (C) of a secured automation system, the system comprising a secure communication server (SCS) which is configured to
a) establish a communication (SC) with the device (Dev),
b) check a device identifier (IDevID, LDevID) of the device (Dev),
c1) if the device identifier (IDevID, LDevID) is an initial device identifier (IDevID), assign a local device identifier (LDevID) to the device and stop the communication (SC) with the device (Dev), or
c2) if the device identifier (IDevID, LDevID) is a local device identifier (LDevID), establish a secure communication (SC) between the device (Dev) and the component (C) of the secured automation system using the local device identifier (LDevID).

9. The system according to claim 8, wherein the secure communication server (SCS) is a VPN server.

10. The system according to claim 8 or 9, further comprising an authentication authority (IAM) being configured to issue the local device identifier (LDevID) to be assigned to the device (Dev).

11. The system according to claim 10, wherein the secure communication server (SCS) is configured to send the device identifier (IDevID, LDevID) to the authentication authority (IAM) which is further configured to check the device identifier (IDevID, LDevID).

12. The system according to any one of the claims 8 to 11, wherein the secured automation system is a building, energy, or industrial automation system.

13. The system according to any one of the claims 8 to 12, wherein the device (Dev) is an Edge device.

14. A computer program product comprising a program code for executing the method for establishing a secure communication (SC) between a device (Dev) and a component (C) of a secured automation system according to any one of the claims 1 to 7 when run on at least one computer.
